# EUROPEAN PATENT SPECIFICATION

(11) **EP 2 117 241 B1**
(45) Date of publication and mention of the grant of the patent: **15.07.2015**
(21) Application number: 08700697.9
(22) Date of filing: 21.01.2008
(51) Int. Cl.: H04W 4/06

(54) **METHOD OF MOBILE TERMINAL RECEIVING MBMS SERVICE AND MBMS SERVICE TRANSMITTING SYSTEM**
VERFAHREN ZUM ERHALTEN EINES MBMS-DIENSTES DURCH EIN MOBILES ENDGERÄT UND MBMS-DIENSTÜBERTRAGUNGSSYSTEM
PROCÉDÉ DE RÉCEPTION D'UN SERVICE MBMS PAR UN TERMINAL MOBILE ET SYSTÈME DE TRANSMISSION DE SERVICE MBMS

(30) Priority: 29.01.2007 CN 200710006080
(43) Date of publication of application: 11.11.2009
(73) Proprietor: ZTE Corporation, Shenzhen, Guangdong 518057 (CN)
(72) Inventor: WANG, Yaying, Guangdong 518057 (CN); MA, Wei, Guangdong 518057 (CN)
(74) Representative: Oficina Ponti, SLP
(86) International application number: PCT/CN2008/000148
(87) International publication number: WO 2008/092371

(56) References cited:
- WO-A1-2005/020476
- CN-A- 1 496 142
- CN-A- 1 736 124
- CN-A- 101 047 892
- US-A1- 2004 224 698
- "3rd Generation Partnership Project; Technical Specification Group Radio Access Network; Introduction of the Multimedia Broadcast Multicast Service (MBMS) in the Radio Access Network (RAN); Stage 2 (Release 7)", 3GPP STANDARD; 3GPP TS 25.346, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.2.0, 1 September 2006 (2006-09-01), pages 1-61, XP050368049,
- "3rd Generation Partnership Project; Technical Specification Group Services and System Aspects; Multimedia Broadcast/Multicast Service (MBMS); Architecture and functional description (Release 7)", 3GPP STANDARD; 3GPP TS 23.246, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.1.1, 1 December 2006 (2006-12-01), pages 1-55, XP050363418,
- "3rd Generation Partnership Project; Technical Specification Group Radio Access Network; Radio Resource Control (RRC); Protocol Specification (Release 7)", 3GPP STANDARD; 3GPP TS 25.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.3.0, 1 December 2006 (2006-12-01), pages 1-1316, XP050368005,

## Description

### Field of the Invention

The present invention relates to communication field, in particular to a method and a system for a mobile terminal receiving MBMS service, and a test method for the mobile terminal receiving MBMS service data.

### Background of the Invention

Mobile phone television is one of the primary services of the third generation mobile communication technology, for which different realization mode technologies have been brought into view in the industry. The main mobile phone television technologies at present mainly comprise DVB-H (Digital Video Broadcasting Handheld), DMB (Digital Multimedia Broadcasting) and MBMS (Multimedia Broadcast / Multicast Service). Among the three technologies, MBMS has the advantages of having no need of adding ground broadcasting device and adding wireless receiving module to the terminal compared with the other two technologies. Therefore, MBMS technology has better utilization prospect and promising market in mobile phone television field than the other two technologies.

In MBMS technology, the main user data transmission channel for transmitting services comprises MTCH (MBMS point-to-multipoint Traffic Channel) and DTCH (Dedicated Traffic Channel). The terminal can notify to start receiving MBMS service by initiatively request to communicate with SS (system simulator). In the circumstances that the terminal being in different connection states, SS can notify the terminal to start receiving MBMS service via different logic channels.

A technical specification of the overall support of Multimedia Broadcast Multicast Service in UTRA is provided in "3rd Generation Partnership Project; Technical Specification Group Radio Access Network; Introduction of the Multimedia Broadcast Multicast Service (MBMS) in the Radio Access Network (RAN); Stage 2 (Release 7)", by the 3GPP STANDARD; 3GPP TS 25.346, 3rd Generation Partnership Project (3GPP), Mobile Competence Centre; 650, Route des Lucioles ; F-06921 Sophia-Antipolis Cedex, France, no. V7.2.0, 1 September 2006.

Document WO 2005/020476 A1 relates to a method for Serving Radio Network Controller (SRNC) inquiring of channel type.

Information relating to the stage 2 description (architectural solution and functionalities) for the MBMS Bearer Service, including all the elements necessary to realize the stage 1 requirements in TS 22.146 and TS 22.246, is provided in "3rd Generation Partnership Project; Technical Specification Group Services and System Aspects; Multimedia Broadcast/Multicast Service (MBMS); Architecture and functional description (Release 7)", 3GPP STANDARD; 3GPP TS 23.246, 3rd Generation Partnership Project (3GPP), Mobile Competence Centre ; 650, Route des Lucioles ; F-06921 Sophia-Antipolis Cedex, France, no. V7.1.1, 1 December 2006.

### Summary of the Present Invention

The present invention aims to provide a method for the mobile terminal receiving MBMS service, a detection method for the mobile terminal receiving MBMS service data and a MBMS service transmitting system.

The method of the mobile terminal receiving MBMS service based on the present invention includes the steps as follows: S102, informing a mobile terminal that related service has been activated by a system simulator; S104, informing the system simulator to request to establish a wireless service channel for point-to-point transmitting by the mobile terminal; S106, establishing the wireless service channel between the system simulator and the mobile terminal; S108, receiving MBMS service data transmitted by the system simulator via the wireless service channel by the mobile terminal.

Wherein, in step S102, the MBMS modified service information is transmitted to the mobile terminal via a DCCH by the system simulator, and, the MBMS modified service information comprises information element. The information element is requesting point-to-point wireless service channel.

The detection method of the mobile terminal receiving MBMS service data based on the present invention includes the steps as follows: S202, a mobile terminal turning into dedicated traffic channel state; S204, informing the mobile terminal that related service has been activated by a system simulator; S206, establishing wireless service channel between the system simulator and the mobile terminal; S208, receiving MBMS service data transmitted by the system simulator via the wireless service channel by the mobile terminal; S210, detecting the state of the mobile terminal, ensuring that the mobile terminal can receive MBMS service data normally when the mobile terminal is in dedicated traffic channel state.

The MBMS service transmitting system based on the present invention comprises a system simulator, used for establishing wireless service channel between a mobile terminal and itself, and transmitting MBMS service data to the mobile terminal via the wireless service channel; and the mobile terminal, used for establishing the wireless service channel between the system simulator and itself, and receiving the MBMS service data transmitted by the system simulator via the wireless service channel.

Wherein, the system simulator is further used for detecting the state of the mobile terminal to ensure that the mobile terminal can receive MBMS service data normally when the mobile terminal is in dedicated traffic channel state.

The method provided by the present invention is easy and practical, and can test and verify the MBMS service ability of the mobile terminal properly.

### Brief Description of the Drawings

The drawings described herein are provided for further understanding the present invention, constitute a part of the present application. The exemplary embodiments of the present invention and the explanation thereof are given by way of illustration only, and thus are not limitative of the present invention, and wherein:
Fig.1 is a flow chart of the method for a mobile terminal receiving MBMS service according to the embodiment of the present invention;
Fig.2 is a flow chart of the test method for a mobile terminal receiving MBMS service data according to the embodiment of the present invention;
Fig.3 is a block diagram of the MBMS service transmitting system according to the embodiment of the present invention.

### Detailed Description

The embodiments of the present invention will be described in detail with reference to the accompanying drawings, wherein if not conflict, the embodiments and the technical features thereof can be combined.

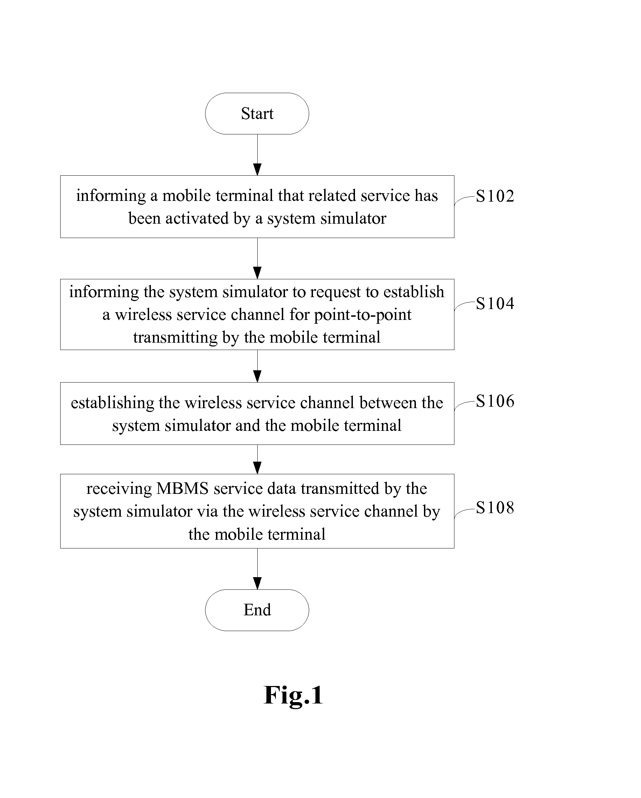

Fig.1 shows the method for a mobile terminal receiving MBMS service according to the embodiment of the present invention. As shown in Fig.1, the method includes the steps as follows: S102, the SS informing the mobile terminal that related service has been activated; S104, the mobile terminal informing the SS to request to establish a wireless service channel for point-to-point transmitting; S106, establishing the wireless service channel between the SS and the mobile terminal; and S108, the mobile terminal receiving the MBMS service data transmitted by the SS via the wireless service channel.

Wherein, in step S102, the SS transmits MBMS MODIFIED SERVICE INFORMATION to the mobile terminal via the DCCH (Dedicated Control Channel) channel, the INFORMATION comprises information element. The information element is requesting point-to-point wireless service channel.

Hereafter, taking the circumstance that the mobile terminal being in CELL_DCH state as an example, the method how the SS notifies the mobile terminal to start to receive the MBMS service transmitted in PTP mode will be explained. When the mobile terminal is in CELL_DCH state, the specific steps of the SS notifying the mobile terminal to start to receive the MBMS service transmitted in PTP mode includes:
1) The SS transmits the MBMS MODIFIED SERVICES INFORMATION to the mobile terminal via the DCCH. Wherein, the information element "*MBMS required UE action*" in the information is set as "*Request PTP RB*".
2) After receiving the MBMS MODIFIED SERVICES INFORMATION, according to the setting of the information element in the INFORMATION, the mobile terminal sends a MBMS MODIFICATION REQUEST INFORMATION to the SS to request to establish the RB required by service transmission.
3) After receiving the service request information (e.g. MBMS MODIFICATION REQUEST), the SS sends a RADIO BEARER SETUP INFORMATION to the mobile terminal to notify the terminal to establish the RB.
4) After establishing the RB between the mobile terminal and the SS, the mobile terminal sends a RADIO BEARER SETUP COMPLETE INFORMATION to notify the SS that the RB is successfully established.
5) The SS sends user data to the mobile terminal through the newly established RB via the DTCH.

That is to say, the SS notifies the mobile terminal that the related service has been activated, the mobile terminal requests to establish the PTP RB according to the notification of the SS, and then the RB between the mobile terminal and the SS is established, the SS sends service to the mobile terminal through the RB.

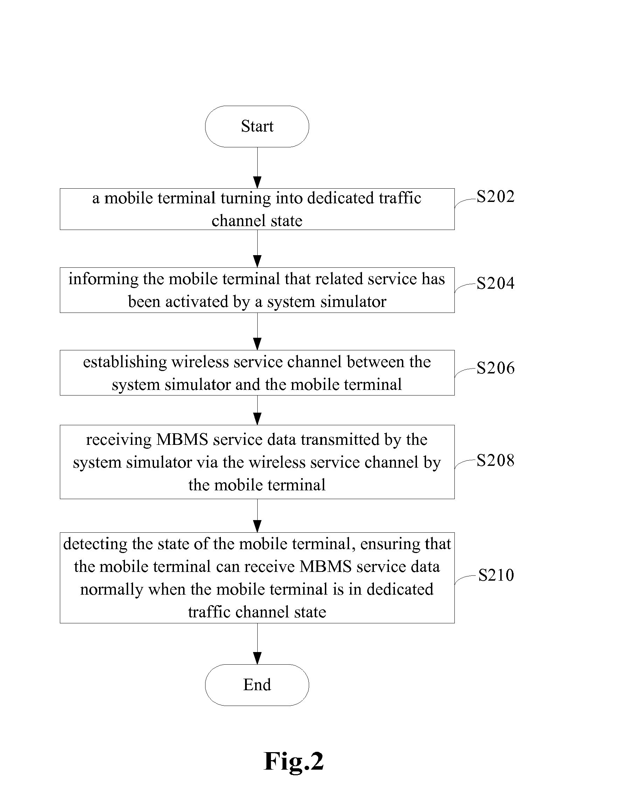

Fig.2 shows the test method for a mobile terminal receiving MBMS service data according to the embodiment of the present invention. As shown in Fig.2, the test method for a mobile terminal receiving MBMS service data includes the steps as follows: S202, the mobile terminal turning into dedicated traffic channel state; S204, the SS informing the mobile terminal that related service has been activated; S206, establishing wireless service channel between the SS and the mobile terminal; S208, the mobile terminal receiving the MBMS service data transmitted by the SS via the wireless service channel; and S210, testing the state of the mobile terminal to ensure that the mobile terminal is in dedicated traffic channel state and can receive MBMS service data normally.

Specifically, in the circumstance of the mobile terminal being in CELL_DCH state, the method for testing whether the mobile terminal can receive MBMS service transmitted in PTP mode after the notification information is received on the DCCH mainly comprises the following steps:
1) The mobile terminal turns into PS-DCCH+DTCH_DCH state (state 6-10) defined by 3GPP document TS 34.108.
2) The SS sends a MBMS MODIFIED SERVICES INFORMATION to the mobile terminal via the DCCH, and sets the information element "*MBMS required UE action*" in the information to be "*Request PTP RB*".
3) After receiving the MBMS MODIFIED SERVICES INFORMATION, according to the setting of the information element in the INFORMATION, the mobile terminal sends a MBMS MODIFICATION REQUEST INFORMATION to the SS to request to establish the RB required by service transmission.
4) After receiving the MBMS MODIFICATION REQUEST INFORMATION, the SS sends a RADIO BEARER SETUP INFORMATION to the mobile terminal to notify the mobile terminal to establish RB.
5) After establishing the RB between the mobile terminal and the SS, the mobile terminal sends a RADIO BEARER SETUP COMPLETE INFORMATION to notify the SS that the RB is successfully established.
6) The SS sends user data of the MBMS service through the newly established PTP RB.
7) The mobile terminal receives the MBMS service.
8) The state of the mobile terminal is detected to judge whether the mobile terminal is in CELL_DCH state or not. If the mobile terminal is in CELL_DCH state, it means the mobile terminal can receive the MBMS service transmitted in PTP mode and is in right state; otherwise, it means the test has failed.

Alternatively, in step 8, judging whether the MBMS service is received normally in step 7, if the MBMS service is received successfully in step 7 and the connection state of the mobile terminal detected in step 8 is the CELL_DCH state, the mobile terminal test is successful, otherwise, the ability test of the mobile terminal is failed.

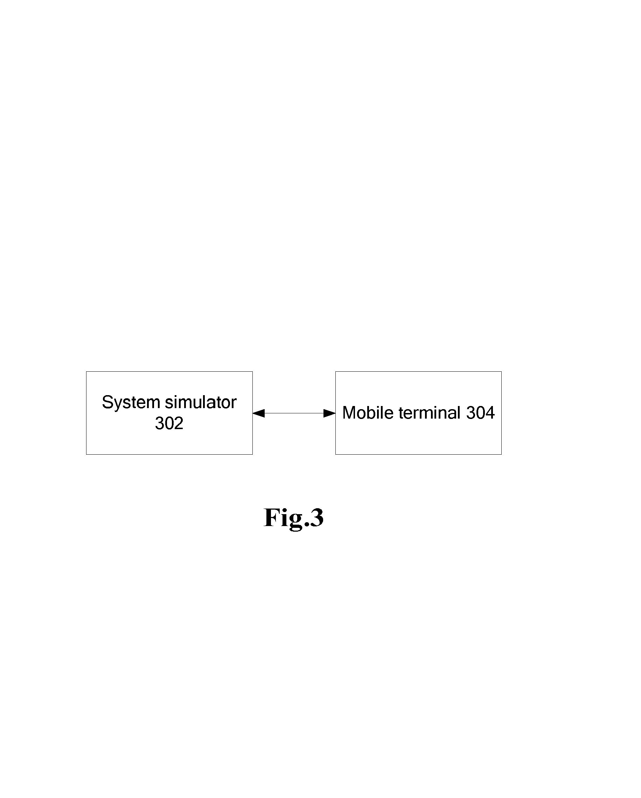

Fig.3 shows the MBMS service transmitting system according to the embodiment of the present invention. As shown in Fig.3, the MBMS service transmitting system comprises the SS **302** and the mobile terminal **304**. Wherein, the SS **302** is used for establishing wireless service channel between the mobile terminal **304** and itself, and transmitting MBMS service data to the mobile terminal via the wireless service channel; and the mobile terminal **304** is used for establishing the wireless service channel between the SS **302** and itself, and receiving the MBMS service data transmitted by the SS via the wireless service channel.

Wherein, the SS detects the state of the mobile terminal to ensure that the mobile terminal is in dedicated traffic channel state and can receive MBMS service data normally.

The method provided by the present invention is easy and practical, and can test and verify the MBMS service ability of the mobile terminal properly.

The descriptions above are only preferable embodiments of the present invention, which are not used to restrict the present invention. For those skilled in the art, the present invention may have various changes and variations. Any amendments, equivalent substitutions, improvements etc. are all concluded in the scope of protection of the present invention as defined in the appended claims.

## Claims

1. A method of a mobile terminal receiving MBMS service, **characterized in that** the method includes the steps of:
a mobile terminal (304) receiving a MBMS modified service message from a system simulator (302) via a dedicated control channel, DCCH, wherein the MBMS modified service message comprises an MBMS-REQUIRED-USER-EQUIPMENT-ACTION information element set as REQUEST-POINT-TO-POINT-RADIO-BEARER;
in accordance with the setting of the MBMS-REQUIRED-USER-EQUIPMENT-ACTION information element in the MBMS modified service message, the mobile terminal sending a MBMS modification request message to the system simulator to request to establish a radio bearer required for service transmission;
the mobile terminal receiving a radio bearer setup message from the system simulator to notify the mobile terminal to establish the radio bearer;
after establishing the radio bearer between the mobile terminal and the system simulator, the mobile terminal sending a radio bearer setup complete message to the system simulator to notify the system simulator that the radio bearer is successfully established;
the mobile terminal receiving user data from the system simulator through the established radio bearer via a dedicated traffic channel, DTCH.

2. The method according to Claim 1, wherein the MBMS-REQUIRED-USER-EQUIPMENT-ACTION information element is requesting point-to-point wireless service channel.

3. The method according to Claim 1 or 2 , wherein, before the step of the mobile terminal receiving the MBMS modified service message from the system simulator via the DCCH, the method comprises the step of the mobile terminal entering into dedicated traffic channel state; and wherein, after finishing the establishment of the radio bearer between the mobile terminal and the system simulator, the method comprises the step of the system simulator detecting the state of the mobile terminal, and ensuring that the mobile terminal is in the dedicated traffic channel state.

4. The method according to Claim 3, wherein after the step of the mobile terminal receiving user data from the system simulator through the established radio bearer via the DTCH, the method further includes the step of the mobile terminal receiving MBMS service data transmitted by the system simulator.

5. A MBMS service transmitting system, **characterized in that** the MBMS service transmitting system comprises:
a mobile terminal (304) ; and
a system simulator; (302)
wherein the mobile terminal is used for: receiving a MBMS modified service message from the system simulator via a dedicated control channel, DCCH, wherein the MBMS modified service message comprises an MBMS-REQUIRED-USER-EQUIPMENT-ACTION information element set as REQUEST-POINT-TO-POINT-RADIO-BEARER; in accordance with the setting of the MBMS-REQUIRED-USER-EQUIPMENT-ACTION information element in the MBMS MODIFIED SERVICE MESSAGE, sending a MBMS modification request message to the system simulator to request to establish a radio bearer required for service transmission; receiving a radio bearer setup message from the system simulator to notify the mobile terminal to establish the radio bearer; after establishing the radio bearer between the mobile terminal and the system simulator, sending a radio bearer setup complete message to the system simulator to notify the system simulator that the radio bearer is successfully established; and receiving user data from the system simulator through the established radio bearer via a dedicated traffic channel, DTCH; and
wherein the system simulator is used for: transmitting the MBMS modified service message to the mobile terminal; receiving the MBMS modification request message from the mobile terminal; transmitting the radio bearer setup message to the mobile terminal; establishing the radio bearer with the mobile terminal; receiving the radio bearer setup complete message from the mobile terminal; and sending the user data to the mobile terminal.

## Patentansprüche

1. Verfahren zum Empfangen eines MBMS-Dienstes an einem mobilen Endgerät, **dadurch gekennzeichnet, dass** das Verfahren die folgenden Schritte umfasst:
Empfangen einer modifizierten MBMS-Dienst-Mitteilung von einem Systemsimulator (302) über einen dedizierten bzw. zugewiesenen Steuerkanal, DCCH, an einem mobilen Endgerät (304);
wobei der modifizierte MBMS-Dienst ein MBMS-REQUIRED-USER-EQUIPMENT-ACTION-Informationselement umfasst, das als eine PUNKT-ZU-PUNKT-FUNKTRÄGER-ANFORDERUNG gesetzt ist;
Senden, gemäß der Einstellung des MBMS-REQUIRED-USER-EQUIPMENT-ACTION-Informationselements in der modifizierten MBMS-Dienst-Mitteilung, von dem Endgerät einer MBMS-Modifizierungs-Anforderungsmitteilung an den Systemsimulator, um einen Funkträger aufzubauen, der für die Dienstübertragung erforderlich ist;
Empfangen an dem mobilen Endgerät einer Funkträgeraufbau-Mitteilung von dem Systemsimulator, um dem mobilen Endgerät mitzuteilen, den Funkträger aufzubauen;
Senden, nachdem der Funkträger zwischen dem mobilen Endgerät und dem Systemsimulator aufgebaut wurde, von dem mobilen Endgerät einer Funkträgeraufbau-abgeschlossen-Mitteilung an den Systemsimulator, um dem Systemsimulator mitzuteilen, dass der Funkträger erfolgreich aufgebaut wurde;
Empfangen an dem mobilen Endgerät von Nutzerdaten von dem Systemsimulator durch den aufgebauten Funkträger über einen dezidierten Verkehrskanal, DTCH.

2. Verfahren nach Anspruch 1, wobei das MBMS-REQUIRED-USER-EQUIPMENT-ACTION-Informationselement einen drahtlosen Punkt-zu-Punkt-Dienstkanal anfordert.

3. Verfahren nach Anspruch 1 oder 2, wobei, bevor der Schritt des Empfangens an dem mobilen Endgerät der modifizierten MBMS-Dienst-Mitteilung von dem Systemsimulator über den DCCH erfolgt, das Verfahren den Schritt des Eintretens des Endgerätes in den dedizierten Verkehrskanalzustand umfasst, und wobei, nach dem Beenden des Aufbaus des Funkträgers zwischen dem mobilen Endgerät und dem Systemsimulator, das Verfahren den Schritt des Detektierens des Systemsimulators des Zustands des mobilen Endgeräts und des Sicherstellens, dass sich das mobile Endgerät in dem dedizierten Verkehrskanalzustand befindet, umfasst.

4. Verfahren nach Anspruch 3, wobei nach dem Schritt des Empfangens an dem mobilen Endgerät von Nutzerdaten von dem Systemsimulator über den aufgebauten Funkträger durch den DTCH, das Verfahren weiterhin den Schritt des Empfangens an dem mobilen Endgerät von MBMS-Dienstdaten umfasst, die von dem Systemsimulator übertragen werden.

5. MBMS-Dienst-Übertragungssystem, **dadurch gekennzeichnet, dass** das MBMS-Dienst-Übertragungssystem aufweist:
ein mobiles Endgerät (304); und
wobei das mobile Endgerät (304) verwendet wird zum:
Empfangen einer modifizierten MBMS-Dienstmitteilung von einem Systemsimulator (302) über einen dedizierten bzw. zugewiesenen Steuerkanal, DCCH, an einem mobilen Endgerät (304);
wobei der modifizierte MBMS-Dienst ein MBMS-REQUIRED-USER-EQUIPMENT-ACTION-Informationselement umfasst, das als eine PUNKT-ZU-PUNKT-FUNKTRÄGER-ANFORDERUNG gesetzt ist;
Senden, gemäß der Einstellung des MBMS-REQUIRED-USER-EQUIPMENT-ACTION-Informationselements in der modifizierten MBMS-Dienst-Mitteilung, von dem Endgerät einer MBMS-Modifizierungs-Anforderungsmitteilung an den Systemsimulator, um einen Funkträger aufzubauen, der für die Dienstübertragung erforderlich ist;
Empfangen einer Funkträgeraufbau-Mitteilung von dem Systemsimulator, um dem mobilen Endgerät mitzuteilen, den Funkträger aufzubauen;
Senden, nachdem der Funkträger zwischen dem mobilen Endgerät und dem Systemsimulator aufgebaut wurde, einer Funkträgeraufbau-abgeschlossen-Mitteilung an den Systemsimulator, um dem Systemsimulator mitzuteilen, dass der Funkträger erfolgreich aufgebaut wurde; und
Empfangen von Nutzerdaten von dem Systemsimulator durch den aufgebauten Funkträger über einen zugeordneten Verkehrskanal, DTCH; und
- wobei der Systemsimulator verwendet wird zum:
Übertragen der modifizierten MBMS-Dienst-Mitteilung an das mobile Endgerät;
Empfangen der MBMS-Modifizierungsanfrage von dem mobilen Endgerät;
Übertragen der Funkträgeraufbau-Mitteilung an das mobile Endgerät;
Aufbauen des Funkträgers in dem mobilen Endgerät;
Empfangen der Funkträgeraufbau-abgeschlossen-Mitteilung von dem mobilen Endgerät; und Senden der Nutzerdaten an das mobile Endgerät.

## Revendications

1. Procédé pour la réception par un terminal mobile de service MBMS, **caractérisé en ce que** le procédé comprend les étapes :
réception par un terminal mobile (304) d'un message de service modifié MBMS émis par un simulateur de système (302) via un canal de contrôle dédié DCCH, où le message de service modifié MBMS
comprend un élément d'information MBMS-REQUIERT-ACTION-EQUIPEMENT-UTILISATEUR en position REQUETE-PORTEUSE-RADIO-POINT-A-POINT;
conformément à la configuration de l'élément d'information MBMS-REQUIERT-ACTION-EQUIPEMENT-UTILISATEUR dans le message de service modifié MBMS, le terminal mobile envoie un message de requête de modification MBMS au simulateur de système pour demander d'établir une porteuse radio nécessaire à la transmission de service ;
réception par le terminal mobile d'un message de configuration de la porteuse radio émis par le simulateur de système pour indiquer au terminal mobile d'établir la porteuse radio ;
après avoir établi la porteuse radio entre le terminal mobile et le simulateur de système, le terminal mobile envoie un message de fin de configuration de la porteuse radio au simulateur de système pour indiquer au simulateur de système que la porteuse radio est établie avec succès ;
réception par le terminal mobile de données utilisateurs en provenance du simulateur de système par le biais de la porteuse radio établie via un canal de trafic dédié DTCH.

2. Procédé selon la revendication 1, où l'élément d'information MBMS-REQUIERT-ACTION-EQUIPEMENT-UTILISATEUR demande un canal de service sans fil point-à-point.

3. Procédé selon la revendication 1 ou 2, où, avant l'étape de réception par le terminal mobile du message de service modifié MBMS émis par le simulateur de système via le DCCH, ledit procédé comprend l'étape de passage du terminal mobile à l'état de canal de trafic dédié ; et où, une fois terminé l'établissement de la porteuse radio entre le terminal mobile et le simulateur de système, ledit procédé comprend l'étape de détection par le simulateur de système de l'état du terminal mobile, garantissant que le terminal mobile soit sur l'état canal de trafic dédié.

4. Procédé selon la revendication 3, où après l'étape de réception par le terminal mobile de données utilisateur émises par le simulateur de système par le biais de la porteuse radio établie via le DTCH, ledit procédé comprend en outre l'étape de réception par le terminal mobile des données de service MBMS transmises par le simulateur de système.

5. Système de transmission de service MBMS, **caractérisé en ce que** ledit système de transmission de service MBMS comprend :
un terminal mobile (304) ; et
un simulateur de système ;
(302)
où le terminal mobile est utilisé pour : recevoir un message de service modifié MBMS du simulateur de système via un canal de contrôle dédié DCCH où ledit message de service modifié MBMS comprend un élément d'information MBMS-REQUIERT-ACTION-EQUIPEMENT-UTILISATEUR en position REQUÊTE-POINT-A-POINT-PORTEUSE-RADIO ; conformément à la configuration de l'élément d'information MBMS-REQUIERT-ACTION-EQUIPEMENT-UTILISATEUR dans le MESSAGE SERVICE MODIFIÉ MBMS, l'envoi d'un message de requête de modification MBMS au simulateur de système pour demander l'établissement d'une porteuse radio, requise pour la transmission de service ; la réception d'un message de configuration de porteuse radio émis par le simulateur de système pour indiquer au terminal mobile d'établir la porteuse radio ; après l'établissement de la porteuse radio entre le terminal mobile et le simulateur de système, l'envoi d'un message de fin de configuration de porteuse radio au simulateur de système pour indiquer audit simulateur de système que la porteuse radio a été établie avec succès ; et la réception de données utilisateur émises par le simulateur de système à travers la porteuse radio établie via un canal de trafic dédié DTCH ; et
dans lequel le simulateur de système est utilisé pour : transmettre le message de service modifié MBMS au terminal mobile ; recevoir le message de requête de modification émis par le terminal mobile ; établir la porteuse radio avec le terminal mobile ; recevoir le message de fin de configuration de la porteuse radio émis par le terminal mobile ; et envoyer les données utilisateur via le terminal mobile.
